# EUROPEAN PATENT APPLICATION

(11) **EP 1 693 573 A2**
(43) Date of publication of application: **23.08.2006**
(21) Application number: 06002052.6
(22) Date of filing: 01.02.2006
(51) Int. Cl.: F04D 29/10

(54) **Industrial pump and manufacturing method thereof**

(30) Priority: 01.02.2005 JP 2005025289
(71) Applicant: Hitachi Industries Co., Ltd., Tokyo (JP)
(72) Inventor: Yoshida, Tetsuya, Adachi-ku Tokyo (JP); Chiba, Yoshimasa, Adachi-ku Tokyo (JP)
(74) Representative: Beetz & Partner

(57) **Abstract**

The invention relates to an industrial pump, comprising a bearing (12) provided in the pump main body (1) and rotatably supporting both end sides of a rotating shaft (6) to which an impeller (7) is attached. A shaft seal device (16) is arranged adjacent to the bearings (12). The shaft seal device (16) is cooled by cooling water introduced from an external portion. The shaft seal case (16a) is fitted to the inner peripheral surface of a bracket (13) accommodating the shaft seal device (16) through shrink-fitting. Cooling water is circulated in the boundary portion between the bracket (13) and the shaft seal case (16a). This construction avoids O-ring sealings between the bracket (13) and the shaft seal case (16a) and thus avoids repair work due to O-ring wear and allows an easy manufacture of the pumps at reduced costs.

## Description

### BACKGROUND OF THE INVENTION

The present invention relates to an industrial pump for supplying water, mainly high-temperature water, such as a feed water pump used in a heat power plant, an atomic power plant and the like.

Conventionally, a mechanical seal or the like is used in a shaft seal apparatus for industrial pumps supplying water, mainly high-temperature water, such as boiler feed water pumps used in heat power plants and atomic reactor feed water pumps used in atomic power plant. Since the shaft seal apparatus reaches a high temperature at the time of operating the pump, the shaft seal apparatus is prevented from a reduction of the shaft seal performance by being cooled by cooling water introduced from the outside of the pump.

Further, as a cooling method of the shaft seal apparatus, for example, as described in JP-A-7-305691, there is employed a method of cooling the shaft seal apparatus by forming a jacket chamber in a part of the casing and a part of a mechanical seal cover, or between the casing and the mechanical seal cover so as to surround the shaft seal apparatus, and injecting the cooling water into the jacket chamber from the outside of the pump.

On the other hand, as a method of forming the jacket chamber so as to surround the shaft seal apparatus, as described in JP-A-7-305691, there is a method, for example, shown in Figs. 7 and 8, in addition to a method of closing an opening portion of the jacket chamber formed within the casing by the mechanical seal cover, a method of closing the jacket chamber formed within the mechanical seal cover by the casing, a method of forming the jacket chamber in a juncture portion between the casing and the mechanical seal cover, and the like.

In the structure of cooling means shown in Fib. 7, a cooling chamber c is formed within a bracket b so as to surround a shaft seal device a, and a cover d is firmly fixed to the opening portion of the cooling chamber c in a liquid tight manner by means such as welding or the like.

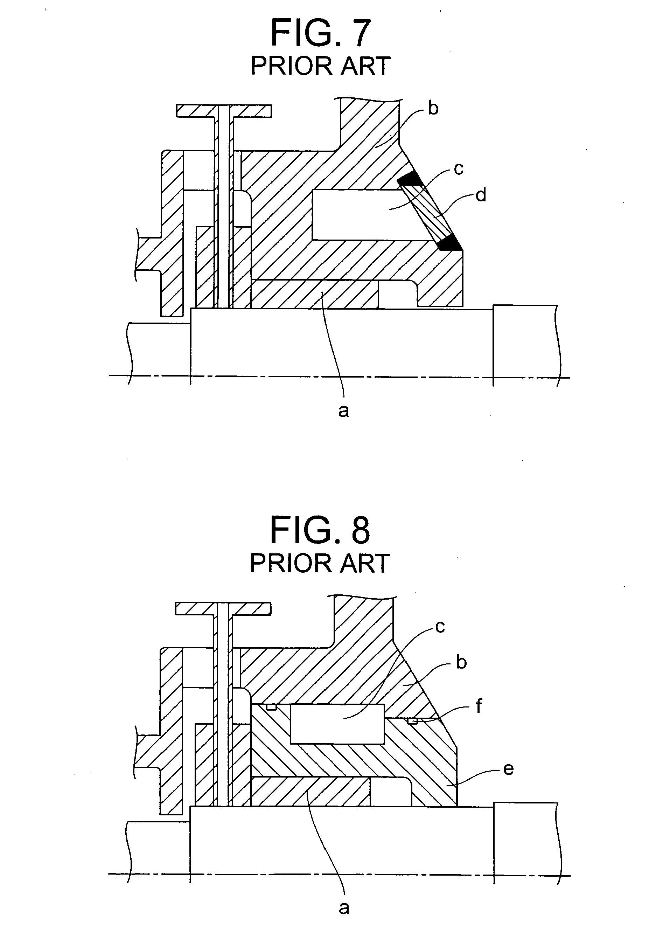

Further, in the structure of cooling means shown in Fig. 8, a cooling chamber c is formed in a shift seal case e of a shaft seal device a, a bracket b provided around the shaft seal case e closes the opening portion of the cooling chamber c, and a packing, for example, an O-ring f or the like is interposed in the boundary surface between the shaft seal case e and the bracket b, for preventing a liquid leak.

However, as in the fluid machine described in JP-A-7-305691, in a structure in which the jacket chamber is formed in a part of the casing or the mechanical seal cover, and the cooling chamber c is formed within the bracket b as shown in Fig. 7, since the structure of a wooden mold for manufacturing a casting mold becomes complicated in the case of manufacturing the casing, the mechanical seal cover and the bracket b as a cast product, the cost of the wooden mold becomes expensive. Further, it is necessary to previously form an opening for getting out sand in the jacket chamber and the cooling chamber in the cast product using the casting mold.

Accordingly, it is necessary to close the opening portion of the jacket chamber by a part of the mechanical seal cover and the casing after casting (in the case of JP-A-7-305691), or seal the opening portion of the cooling chamber c by the cover d (in the case of the cooling means shown in Fig. 7). As a result, the structure of the cooling means becomes complicated, and the cost of an entire pump is increased.

Further, since defects such as blow holes or the like tend to be generated in the casting at the time of casting, the casting lacks reliability. Further, in the case that the cover d is welded to the opening portion of the cooling chamber c, it is necessary to execute a work of forming a concave step portion in the opening portion of the cooling chamber c in accordance with a machine work, welding the cover d in a state of fitting the cover d to the concave step portion, and thereafter applying a heat treatment for removing a residual stress of the weld portion. Accordingly, a lot of work man hours are necessary for the machine work and the weld work, and the cost of the entire pump is increased.

On the other hand, as shown in JP-A-7-305691 and Fig. 8, in the structure in which the cooling chamber c is formed in the boundary portion between the casing and the mechanical seal cover or the boundary portion between the shaft seal case e and the bracket b, the O-ring f is provided for preventing liquid leak from the boundary surface, however, since the O-ring f is deteriorated by the use under high temperature and the seal effect is lowered at an early stage, it is necessary to periodically replace the O-ring.

However, since it is necessary to execute the replacing work of the O-ring f by dissembling the shaft seal device a, a lot of time and man hours are required for the replacing work, and the workability is bad. Further, since the pump can not be operated during the repair period, it is necessary to stop the plant.

### BRIEF SUMMARY OF THE INVENTION

The present invention is made for improving the problem of the prior art mentioned above, and an object of the present invention is to provide an industrial pump in which the cooling means for cooling the shaft seal apparatus are easily formed, and a manufacturing method thereof.

In accordance with the present invention, there is provided an industrial pump comprising:
a pump main body;
a rotating shaft accommodated within the pump main body and to which an impeller is attached;
a bearing rotatably supporting both end sides of the rotating shaft; and
a shaft seal device arranged adjacent to the bearing,
wherein a bracket is provided in the pump main body, and a shaft seal case provided in the shaft seal apparatus is fitted to the bracket in accordance with a shrink fitting so as to be integrated. At least one of the bracket and the shaft seal case cools the shaft seal device by circulating cooling water introduced from an external portion in the boundary potion between the bracket and the shaft seal case.

In accordance with that structure, it is possible to use a cast product in which it is not necessary to manufacture a casting mold by using a wooden mold having a complicated structure, and the cost of the wooden mold can be avoided. Accordingly, it is possible to shorten the manufacturing period, it is not necessary to weld the cover to the opening portion of the cooling chamber so as to close, the welding work and the heat treatment after the welding are not required, and it is possible to intend to reduce the working man hours required for the works. Further, it is possible to reduce the cost of the entire pump.

In the industrial pump in accordance with the present invention, an annular cooling chamber is provided in the inner peripheral surface of the bracket, or an annular cooling water flow path is provided in the outer peripheral surface of the shaft seal case. In accordance with the structure mentioned above, it is possible to directly cool the outer peripheral surface of the shaft seal case by using the cooling water introduced into the cooling chamber of the cooling water flow path from the external portion, and the cooling effect of the shaft seal device is further improved. In addition, it is possible to easily form the cooling chamber or the cooling water flow path in the bracket or the shaft seal case. A reduction of the parts cost can be achieved.

In the industrial pump in accordance with the present invention, a concavo-convex surface constituted by an annular concave groove and an annular protrusion is formed in a fitting surface between the bracket and the shaft seal case. In accordance with that structure, the average surface pressure becomes twice as much as in the case that the fitting surface between the bracket and the shaft seal case is formed as a flat surface. It is not necessary that the O-ring for preventing the liquid leak is provided in the boundary of the fitting surface between the bracket and the shaft seal case. Accordingly, it is not necessary to execute the maintenance work of dissembling the shaft seal device and periodically replacing the O-ring, or the like. It is possible to solve the problem that the pump can not be operated during the repair period and that it is necessary to stop the plant.

In the industrial pump in accordance with the present invention, a leading end side corner portion of the protrusion is formed in an edge shape, and a curvature R is formed in the portion corresponding to the portion of the bracket to which stress tends to be concentrated at the time of shrink fitting, and brought into contact with an end portion of the shaft seal case. In accordance with that structure, when shrink fitting the shaft seal case to the bracket, one fitting surface bites into the opposing member, and the surface pressure of the edge portion in the protrusion can attain a high surface pressure value which is locally severalfold as much as the average surface pressure. In addition, it is possible to adjust the rate between the concave groove and the protrusion in the entire length of the fitting portion, and an optional surface pressure can be obtained between both the elements. Further, it is possible to disperse the concentrated stress at the time of the shrink fitting, and the durability of the bracket and the shaft seal case is improved.

In accordance with the present invention, both end sides of the rotating shaft to which the impeller is attached are rotatably supported by a bearing installed in the pump main body. The shaft seal apparatus arranged adjacent to the bearing is cooled by the cooling water introduced from the external portion. The cooling chamber or the cooling water flow path is formed in the inner peripheral surface of the bracket to which the shaft seal apparatus is attached, or the outer peripheral surface of the shaft seal case. The concavo-convex surface constituted by the annular concave grooves and the annular protrusions is formed in the fitting surface of the bracket or the shaft seal case. In addition, the shaft seal case is fitted to the inner periphery of the bracket in the state of heating the bracket and cooling the shaft seal case. Thereafter, the bracket and the shaft seal case are cooled, and the shaft seal case is shrink fitted into the bracket.

In accordance with this method, it is possible to use the cast product, and it is not necessary to manufacture the casting mold by using a wooden mold having a complicated structure. Further, it is possible to shorten the manufacturing period. Further, it is not necessary to weld the cover to the opening portion of the cooling chamber so as to close it, and the welding work and the heat treatment after welding are not necessary. Further, it is possible to reduce the working man hours required for the works, and it is possible to reduce the cost of the entire pump.

The average surface pressure becomes twice as much as in the case that the fitting surface between the bracket and the shaft seal case is formed as a flat surface, and it is not necessary that an O-ring for preventing liquid leak is provided in the boundary of the fitting surface between the bracket and the shaft seal case. It is not necessary to execute the maintenance work of dissembling the shaft seal device and periodically replacing the O-ring, or the like. Thus, it is possible to solve the problem that the pump can not be operated during the repair period and it is necessary to stop the plant.

Other objects, features and advantages of the invention will become apparent from the following description of embodiments of the invention taken in conjunction with the accompanying drawings.

### BRIEF DESCRIPTION OF THE DRAWINGS

Fig. 1 is a vertical cross sectional view of an embodiment of an industrial pump in accordance with the present invention;
Fig. 2 is a vertical cross sectional view of details near the shaft seal apparatus;
Fig. 3 is a view explaining the shrink fitting of a shaft seal case;
Fig. 4 is a view explaining the shrink fitting of a shaft seal case;
Fig. 5 is a vertical cross sectional view of another embodiment of the shaft seal portion;
Fig. 6 is a horizontal cross sectional view of the other embodiment of the shaft seal portion;
Fig. 7 is a vertical cross sectional view of a portion near the shaft seal device of a conventional industrial pump; and
Fig. 8 is a vertical cross sectional view of the portion near the shaft seal device of another conventional industrial pump.

### DETAILED DESCRIPTION OF THE INVENTION

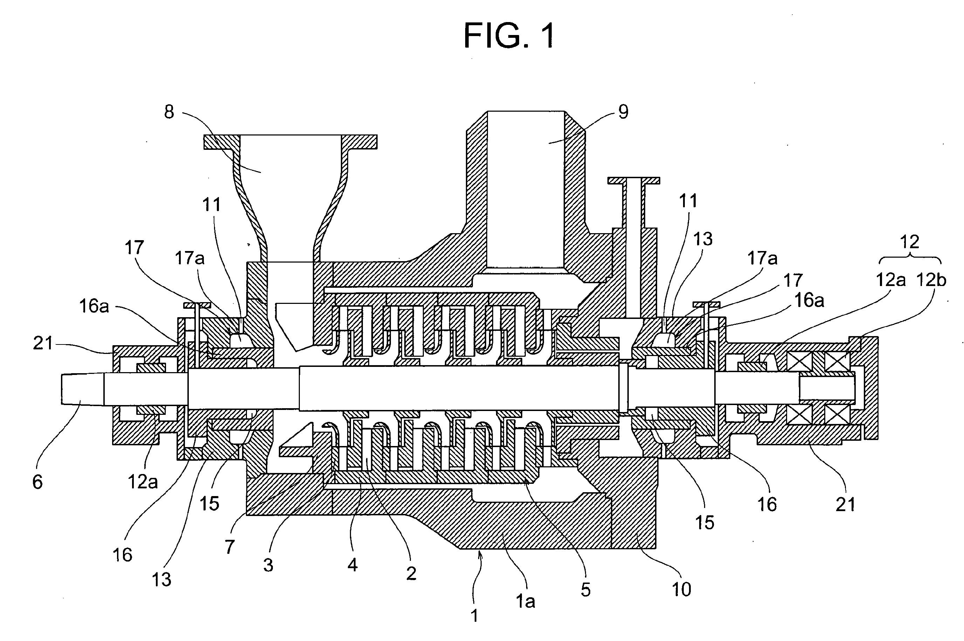

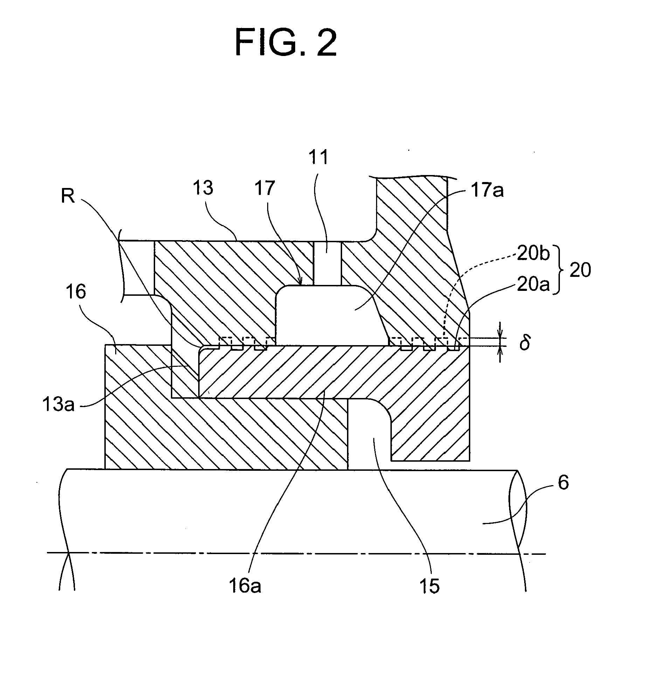

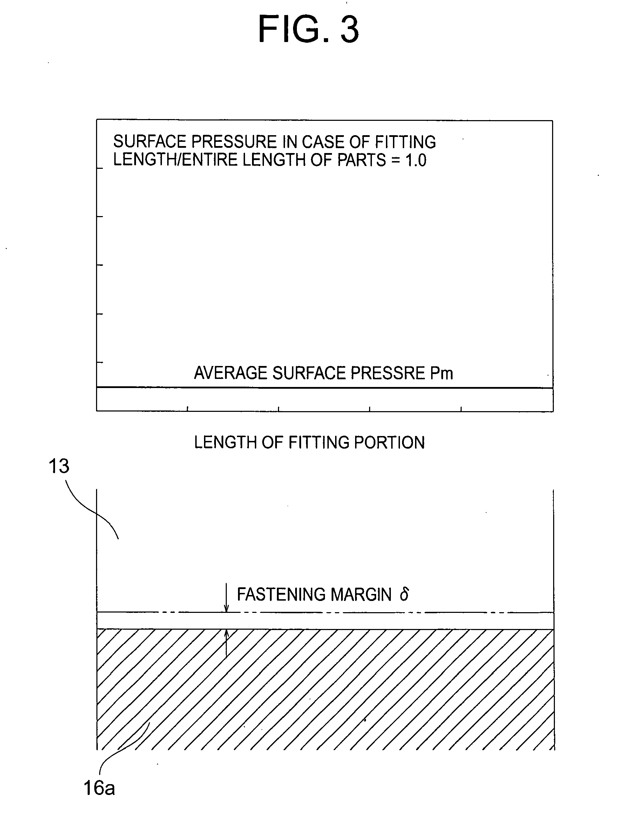

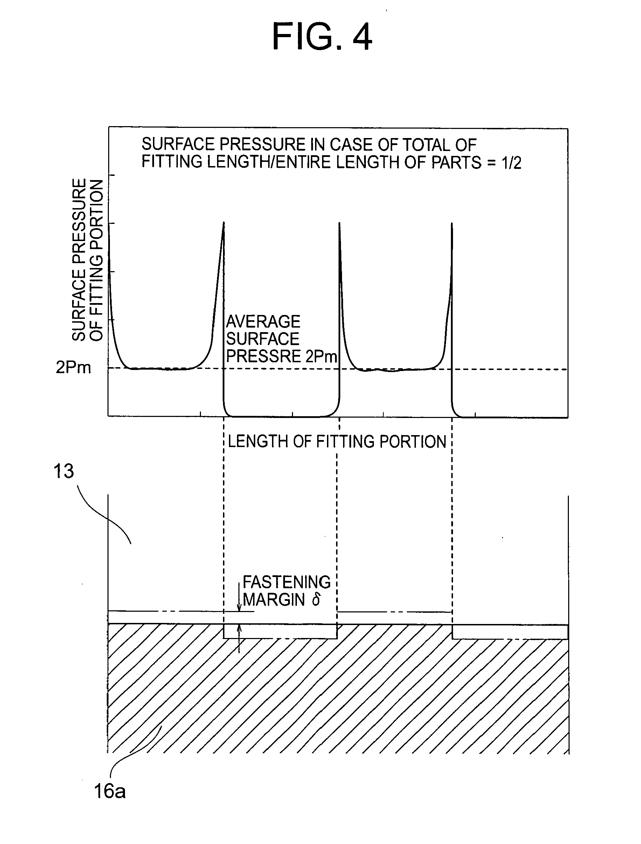

A description will be given in detail of an embodiment in accordance with the present invention with reference to the accompanying drawings. Fig. 1 is a vertical cross sectional view of a barrel-type multistage turbine pump corresponding to an embodiment of an industrial pump, and Fig. 2 is a vertical cross sectional view of details near the shaft seal device of the turbine pump shown in Fig. 1. Figs. 3 and 4 are views explaining the shrink fitting of the shaft seal case of the industrial pump.

In the pump main body 1 of the turbine pump shown in Fig. 1, an inner casing 5 having a plurality of stages provided with a return guide vane 2 and a guide vane 3, both having a rectifying action, is provided within an outer casing 1a called as a barrel casing. The centers of the outer casing 1a and the inner casing 5 are identical, and a rotating shaft 6 is provided so as to pass through a center portion of the inner casing 5. An impeller 7 provided in each of the stages 4 is attached to the rotating shaft 6.

A suction port 8 is provided in an outer peripheral portion in one end side of the outer casing 1a. A high-temperature water is flowed into the first stage impeller 7 of the inner casing 5 from the suction port 8. The high-temperature water flowed into the first stage impeller 7 is sequentially boosted by the plural stages of impellers 7 provided in every stages 4 and reaches the final stage impeller 7. Further, the high-temperature water is discharged from a discharge port 9 provided in an outer peripheral portion in the other end side of the outer casing 1a.

A casing cover 10 having a structure standing against the high-pressure water is fastened to an opening portion in the discharge port 9 side of the outer casing 1a by a fastening device such as a bolt or the like (not shown). A bearing housing 21 in which a bearing 12 rotatably supporting the rotating shaft 6 is accommodated is fastened to one end side of the outer casing 1a and the center portion of the casing cover 10 by a fastening device (not shown) via a bracket 13.

A radial bearing 12a is accommodated within the bearing housing 21 fastened to one end side of the outer casing 1a, and a radial bearing 12a and a thrust bearing 12b are accommodated within the bearing housing 21 fastened to the side of the casing cover 10. Each of the radial bearings 12a supports the load in the radial direction of the rotating shaft 6, and the thrust bearing 12b supports the load in the thrust direction.

A shaft seal chamber 15 is formed within each of the brackets 13, between the bearing housing 21 and the suction port 8 and between the casing cover 10 and the bearing housing 21. A shaft seal device 16 such as a mechanical seal or the like is accommodated within the shaft seal-chamber 15. Cooling means 17 are provided around the shaft seal chamber 15. The cooling means 17 cool the shaft seal device 16 by cooling water introduced from the outside of the pump via a water filler 11. The cooling water cooling the shaft seal device 16 is discharged to the outside of the pump from a water outlet (not shown).

The cooling means 17 have an annular cooling chamber 17a formed in the inner peripheral surface of the bracket 13 as shown in Fig. 2. A shaft seal case 16a of the shaft seal apparatus 16 is shrink fitted to the inner peripheral surface of the bracket 13 in accordance with a method mentioned below. The opening portion of the cooling chamber 17a is sealed by the shaft seal case 16a. In addition, the bracket 13 and the shaft seal case 16a are integrally formed. A radius R is formed in a corner portion in the shaft seal case 16a side of a flange 13a protruding from the inner peripheral surface of the bracket 13 so as to prevent stress from being concentrated to the root portion of the flange 13a after the shrink fitting.

It is necessary to pay attention to the following points, at the time of shrink fitting the shaft seal case 16a to the inner peripheral surface of the bracket 13 so as to form a cooling chamber 17a having a sealed structure. A predetermined fastening margin δ is formed in the fitting portion between both the elements 13 and 16a after manufacturing the bracket 13 and the shaft seal case 16a. Accordingly, both the elements 13 and 16a are machined in such a manner that the inner diameter of the bracket 13 becomes smaller at the degree of the fastening margin δ, or the outer diameter of the shaft seal case 16a becomes larger at the degree of the fastening margin δ. Thereafter, the bracket 13 and the shaft seal case 16a are shrink fitted. At this time, if the fitting surface 20 between the bracket 13 and the shaft seal case 16a is formed in a flat surface over the entire length of the fitting portion as shown in Fig. 3, the surface pressure Pm of the fitting portion obtained by the fastening margin δ becomes approximately uniform in the longitudinal direction of the fitting portion.

On the contrary, in the case of forming a concavo-convex portion corresponding to the fastening margin δ in one of the fitting surfaces 20 in a circumferential direction so as to shrink fit, as shown in Fig. 4, the surface pressure of the fitting portion is increased in comparison with the case of Fig. 3 in which the fitting surface 20 is formed in the flat surface. In the case of Fig. 4, the concavo-convex portion is formed with respect to the entire length of the fitting portion in such a manner that the rate of the concave grooves 20a and the protrusions 20b satisfies a relation 1 : 1. As is apparent from Fig. 4, if the concavo-convex portion is formed in the fitting surface 20, the average surface pressure becomes 2Pm which is approximately twice as much as in the case that the fitting surface 20 is formed in the flat surface.

Since the corner portion of the protrusion 20b is not rounded but is formed in a sharp edge shape, one fitting surface 20 is plastically deformed and the protrusion 20b bites into the opposing member, at the time of shrink-fitting the bracket 13 and the shaft seal case 16a. The surface pressure of the edge portion of the protrusions 20b becomes locally very high and is about threefold to fourfold as much as the average surface pressure Pm. In accordance with the present method, it is possible to adjust the surface pressure Fm between the bracket 13 and the shaft seal case 16a by appropriately selecting the rate between the concave grooves 20a and the protrusions 20b over the entire length of the fitting portion. Accordingly, it is possible to freely adjust the surface pressure in correspondence to the specification, the magnitude, the use conditions and the like of the industrial pump.

A description will now be given of the method of shrink-fitting the shaft seal case 16a of the shaft seal device 16 to the, inner peripheral surface of the bracket 13. When the cooling chamber 17 having the sealed structure is manufactured by shrink-fitting the shaft seal case 16a to the inner peripheral surface of the bracket 13, the bracket 13 and the shaft seal case 16a are manufactured by using the same metal material. Because the portion near the shaft seal device 16 comes to a high temperature at the time of being operated in the industrial pump used for feeding high-temperature water, and in the case that the bracket 13 and the shaft seal case 16a are manufactured from different metal materials, a non-uniformity of the surface pressure and a reduction of the surface pressure are generated in the fitting surface 20 due to the difference of the thermal expansion coefficient, and a water leak is caused.

The bracket 13 and the shaft seal case 16a are manufactured in accordance with the forging process by using the same metal material. When shrink-fitting, the fitting surfaces 20 are precisely machined so that a predetermined fastening margin δ can be obtained. At this time, the concave grooves 20a and the protrusions 20b are formed in one of the fitting surfaces 20.

Next, the bracket 13 side is heated, for example, to about 150 °C by a heating furnace or the like.
Thereby, the inner diameter of the bracket 13 is enlarged through the thermal expansion. On the other hand, the shaft seal case 16a side is cooled to about -40 °C with dry ice or the like, thereby heat.contracting the outer diameter of the shaft seal case 16a.

In this state, the shaft seal case 16a is fitted and inserted to the inner peripheral surface of the bracket 13, and the cooling chamber 17a formed in the inner peripheral surface of the bracket 13 is sealed. Thereafter, the bracket 13 and the shaft seal case 16a are naturally cooled or forcedly cooled. After shrink-fitting the outer peripheral surface of the shaft seal case 16a to the inner peripheral surface of the bracket 13, the bracket 13 contracts through natural cooling or forced cooling, and the shaft seal case 16a expands. At this time, the protrusions 20b protruding from the fitting portion 20 bite into the fitting surfaces 20 of the opposing member, and the bracket 13 and the shaft seal case 16a are integrated. On the basis of this, a high surface pressure Pm shown in Fig. 4 is obtained in the fitting surface 20. Even if the O-ring for preventing a leak is not provided in the boundary surface between the bracket 13 and the shaft seal case 16a, no liquid leak is generated. Thus, seal means such as the O-ring or the like are not necessary.

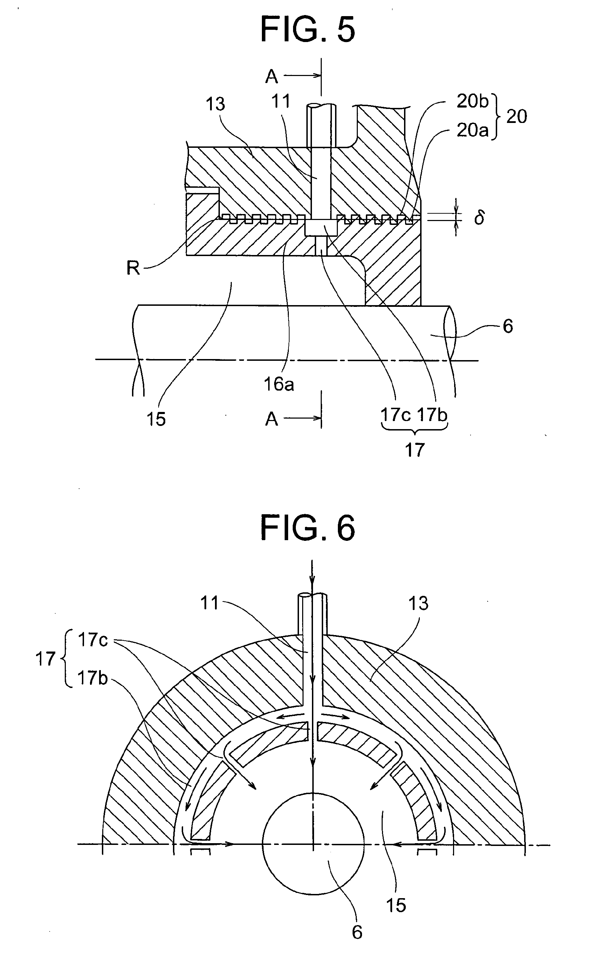

Figs. 5 and 6 show another embodiment of the shaft seal apparatus 16 in accordance with the present invention. In the cooling means 17 for cooling the shaft seal device 16, an annular cooling water flow path 17b is formed in the outer peripheral surface of the shaft seal case 16a. The opening portion of the cooling water flow path 17b is sealed by the inner peripheral surface of the bracket 13. The water channel 11 for the cooling water is pierced in the outer peripheral portion of the bracket 13. The cooling water flows into the cooling water flow path 17b from the water channel 11. The cooling water fed to the cooling water flow path 17b flows into the shaft seal chamber 15 from a plurality of inflow ports 17c pierced in the inner peripheral side of the cooling water flow path 17b so as to cool the shaft seal apparatus 16. Thereafter, the cooling water is discharged to the external portion from an outflow port (not shown).

In the embodiment shown in Fig. 5, the outer peripheral surface of the shaft seal case 16a is shrink-fitted to the inner peripheral surface of the bracket 13. The concave grooves 20a and the protrusions 20b are alternately formed in the fitting surfaces 20 of the bracket 13 and the shaft seal case 16a in accordance with a machining process, in the same manner as shown in Fig. 2. A high surface pressure Pm can be obtained in the fitting surface 20 at the time of shrink-fitting the shaft seal case 16a. The curvature R is formed in the corner portion in the fitting surface 20 side of the flange 16b protruding from one end side of the shaft seal case 16a. The curvature R prevents stress from being concentrated in the root portion of the flange 16b after the shrink-fitting.

In this case, in each of the embodiments, the bracket 13 and the shaft seal case 16a are manufactured through forging, however, any one or both of them may be manufactured by casting as far as the same material is employed. However, if both the bracket 13 and the shaft seal case 16a are formed as forged products, defects generated at the time of casting run out, and repairing the defects is not necessary. Further, the quality of the parts is improved. In each of the embodiments mentioned above, the concave grooves 20a and the protrusions 20b are formed in the outer peripheral surface of the shaft seal case 16a, however, the concave groove 20a and the protrusions 20b may be formed in the inner peripheral surface side of the bracket 13.

In accordance with the industrial pump of the present invention, since it is not necessary to weld the cover to the opening portion of the cooling means so as to close it, the welding work and the heat treatment after the welding are not necessary. It is possible to reduce the working man hours required for the welding work and the heat treatment work, and it is possible to reduce the cost of the entire pump.

It should be further understood by those skilled in the art that although the foregoing description has been made on embodiments of the invention, the invention is not limited thereto and various changes and modifications may be made without departing from the spirit of the invention and the scope of the appended claims.

## Claims

1. Industrial pump comprising:
a pump main body(1);
a rotating shaft (6) which is accommodated within the pump main body (1) and to which an impeller (7) is attached;
a bearing (12) rotatably supporting both end sides of the rotating shaft (6); and
a shaft seal device (16) having a shaft seal case arranged adjacent to the bearing,
wherein a bracket (13) is provided in said pump main body (1), the shaft seal case (16a) is fitted to the bracket (13) through shrink fitting so as to be integrated, and at least one of the bracket (13) and the shaft seal case (16a) has cooling means (17) for cooling the shaft seal device (16) by circulating cooling water introduced from an external portion in the boundary portion between the bracket (31) and the shaft seal case (16a).

2. Industrial pump according to claim 1,
wherein the cooling means (17) include an annular cooling chamber (17a) formed in the inner peripheral surface of the bracket (13), or an annular cooling water flow path (17b) formed in the outer peripheral surface of the shaft seal case (16a).

3. Industrial pump according to claim 1 or 2,
wherein a concavo-convex surface having annular concave grooves (20a) and annular protrusions (20b) is formed in the fitting surface (20) of the bracket (13) and the shaft seal case (16a).

4. Industrial pump according to any of claims 1 to 3,
wherein the leading end side corner portion of the protrusion (20b) is formed in an edge shape, and a curvature (R) for avoiding a stress concentration is formed in the corner portion of the fitting portion of the bracket (13) to the shaft seal case (16a).

5. Method of manufacturing an industrial pump for rotatably supporting both end sides of a rotating shaft (6) to which an impeller (7) is attached by a bearing (12) installed in the pump main body (1), and cooling a shaft seal device (16) arranged adjacent to the bearing (12) by cooling water introduced from an external portion, wherein the method comprises the following steps:
- Forming a cooling chamber (17a) or a cooling water flow path (17b) in any one of the inner peripheral surface of a bracket (13) to which the shaft seal device (16) is provided, and the outer peripheral surface of shaft seal case (16a),
- forming a concavo-convex surface having annular concave grooves (20a) and annular protrusions (20b) in the fitting surface (20) of the bracket (13) and the shaft seal case (16a),
- fitting the shaft seal case (16a) to the inner periphery of the bracket (13) by heating the bracket (13), and
- thereafter integrating the bracket (13) and the shaft seal (16a) case by cooling the bracket (13) and the shaft seal case (16a).

6. Method according to claim 5, wherein the bracket (13) and the shaft seal case (16a) are fitted by cooling the shaft seal case (16a) at the time of heating the bracket (13).

7. Method according to claim 5 or 6, wherein the bracket (13) and the shaft seal case (16a) are made of the same metal material.
